# EUROPEAN PATENT APPLICATION

(11) **EP 2 402 214 A1**
(43) Date of publication of application: **04.01.2012**
(21) Application number: 10168328.2
(22) Date of filing: 02.07.2010
(51) Int. Cl.: B60Q 1/50, B60Q 5/00, B06B 1/02, G10K 9/10, G08B 3/00, B60Q 1/22, G01P 13/04

(54) **Car reverse alarm**

(71) Applicant: Lai, Hsi-Chi, Chung-Ho City T'ai pei (TW)
(72) Inventor: Lai, Hsi-Chi, Chung-Ho City T'ai pei (TW)
(74) Representative: Gee, Steven William

(57) **Abstract**

A car reverse alarm is provided. The car reverse alarm includes a power source processing unit (10), an audio signal generating unit (20), an audio signal filter unit (30), an audio signal amplification unit (40), a voice speaker (50), and a voice speaker protection unit (60). The power source processing unit (10) receives an input power source (Vin) for generating a first power source (V1) and a second power source (V2). The audio signal generating unit (20) receives a backing signal, and then generates an audio signal according to the received backing signal, and transmits the audio signal to the audio signal filter unit (30). The audio signal filter unit (30) receives the audio signal, and then generates an audio signal filtering signal. The audio signal amplification unit (40) then generates an audio driving signal and transmits the audio driving signal to the voice speaker (50). The voice speaker (50) generates an alert voice and is protected by the voice speaker protection unit (60).

## Description

### BACKGROUND OF THE INVENTION

### 1. Field of the Invention

The present invention relates generally to a car reverse alarm, and more particularly, to a car reverse alarm adapted for generating an audio signal with an integrated circuit (IC) audio signal generating unit.

### 2. The Prior Arts

Cars have almost been affordable and used in all over the world, and the overall quantity of the cars remains annually increasing. Many devices and equipment have been developed for facilitating to improve the car security. Particularly, in metropolitan areas having large populations, car related security issues are highly concerned. Since the metropolitan areas are typically more crowd than the countryside or suburbs, cars are more frequently driven to back into parking spaces, or for changing driving directions. Correspondingly, car manufacturers developed car reverse alarms for generating alert voice when the car is backing, so as to remind the pedestrians or other vehicles therearound.

A conventional car reverse alarm employs individual electronic components, and generates a high-volume and high-tone alerting voice in an analog signal operation manner, e.g., using an analog white noise generator to generate a broadband noise and then using a band pass filter to remove lower frequency portion and higher frequency portion from the broadband noise, thus obtaining the audio signal of the desired frequency band. Finally, a driving circuit receives the audio signal and generates a driving signal accordingly, thus producing an alert voice from a speaker.

However, the conventional car reverse alarm has the following disadvantages. First of all, the tone of the alert voice is determined by the band pass filter, and the generated alert voice is typically a narrowband buzz noise. Such an alert voice is quite normal and drab, and less identificable.

Further, generally, the analog electronic components employed in the conventional car reverse alarm are often sensitive to the environment. Particularly, the temperature variation and electronic noise often mislead the car reverse alarm to generate undesired alert voice. As such, a car reverse alarm adapted for a digital approach for controlling to generate alert voices of different frequencies is desired. Specifically, the car reverse alarm is adapted for generating speech voices such as "attention", or "car backing".

### SUMMARY OF THE INVENTION

Accordingly, a primary objective of the present invention is to provide a car reverse alarm, adapted for being equipped on a car and generating an alert voice when the car is backing. The car reverse alarm includes a power source processing unit, an audio signal generating unit, an audio signal filter unit, an audio signal amplification unit, a voice speaker, and a voice speaker protection unit.

The power source processing unit receives an input power source for generating a first power source and a second power source. The first power source and the second power source are stable, and respectively supplied for the audio signal amplification unit, and the audio signal generating unit. The audio signal generating unit receives a backing signal, and then generates an audio signal according to the received backing signal, and transmits the audio signal to the audio signal filter unit. The audio signal filter unit receives the audio signal, and then generates an audio signal filtering signal, and transmits the audio signal filtering signal to the audio signal amplification unit. The audio signal amplification unit then generates an audio driving signal and transmits the audio driving signal to the voice speaker. The voice speaker generates an alert voice and is protected by the voice speaker protection unit. The alert voice is adapted for alerting the pedestrians or vehicles therearound for attention of the car. In such a way, the car can be backed in the parking space with improved security.

The power source processing unit includes a power source protection unit, a filter voltage step-down unit and a voltage stabilization unit. The power source protection unit receives the input power source for generating the first power source. The filter voltage step-down unit receives the first power source for generating a voltage drop power source. The power stabilization unit receives the voltage drop power source for generating the second power source. The voice speaker includes a loudspeaker. The voice speaker protection unit includes a diode.

The audio signal generating unit is preferably an integrated circuit (IC) chip, e.g., a single chip microcontroller, or a single chip microprocessor. The audio signal generating unit for example includes a program execution unit, a digital-to-analog converter (DAC) unit, a data memory, and a program memory. The program memory saves a firmware program. The data memory saves temporarily generated data during execution of the firmware program. The program execution unit executes the firmware program according to the received backing signal, and generates a digital preliminary audio signal. The DAC unit converts the digital preliminary audio signal into an analog audio signal.

According to an aspect of the present invention, the firmware program can be updated for modifying the audio signal outputted from the audio signal generating unit. In such a way, the voice speaker outputs the desired voice. The voice for example can be outputted with different tones or volumes, or even simulating the human speech, e.g., "attention, the car is backing".

### BRIEF DESCRIPTION OF THE DRAWINGS

The present invention will be apparent to those skilled in the art by reading the following detailed description of preferred embodiments thereof, with reference to the attached drawings, in which:

Fig. 1 is a schematic diagram illustrating a car reverse alarm according to an embodiment of the present invention; and

Fig. 2 is a circuit diagram illustrating the circuitry of the car reverse alarm of the present invention.

### DETAILED DESCRIPTION OF THE PREFERRED EMBODIMENT

The accompanying drawings are included to provide a further understanding of the invention, and are incorporated in and constitute a part of this specification. The drawing illustrates embodiments of the invention and, together with the description, serves to explain the principles of the invention.

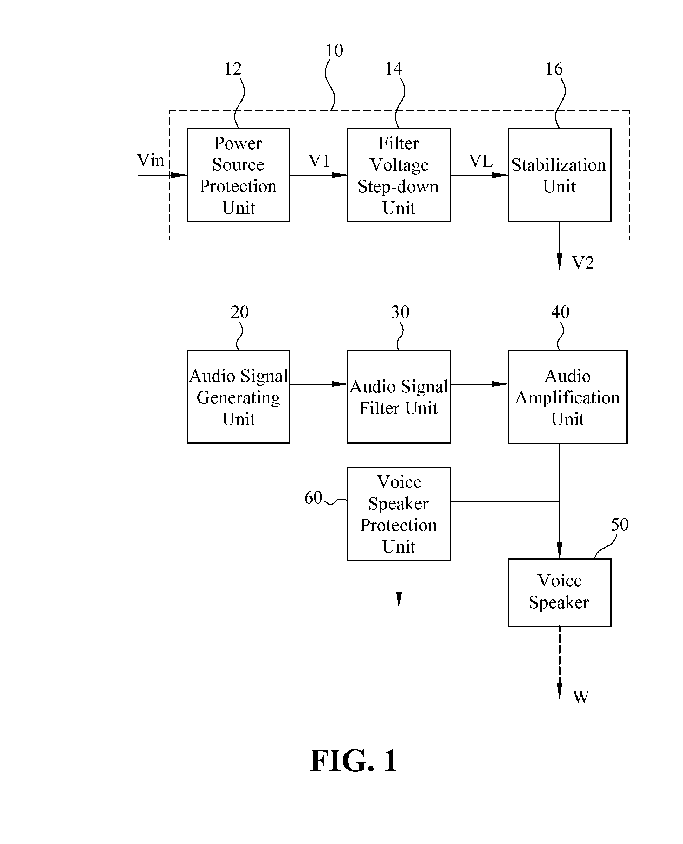

Fig. 1 is a schematic diagram illustrating a car reverse alarm according to an embodiment of the present invention. Referring to Fig. 1, the present invention provides a car reverse alarm. The car reverse alarm includes a power source processing unit 10, an audio signal generating unit 20, an audio signal filter unit 30, an audio signal amplification unit 40, a voice speaker 50, and a voice speaker protection unit 60.

The power source processing unit 10 receives an input power source Vin for generating a first power source V1 and a second power source V2. The first power source V1 and the second power source V2 are stable, and respectively supplied for the audio signal amplification unit 40, and the audio signal generating unit 20.

The audio signal generating unit 20 receives a backing signal (not shown in the drawings), and then generates an audio signal according to the received backing signal, and transmits the audio signal to the audio signal filter unit 30. The backing signal is generated either when the car is being backing, or when the car is set with a reverse gear shift. The audio signal filter unit 30 receives the audio signal, and then generates an audio signal filtering signal, and transmits the audio signal filtering signal to the audio signal amplification unit 40. The audio signal amplification unit 40 then generates an audio driving signal and transmits the audio driving signal to the voice speaker 50. The voice speaker 50 generates an alert voice and is protected by the voice speaker protection unit 60. The alert voice is adapted for alerting the pedestrians or vehicles therearound for attention of the car. In such a way, the car can be backed in the parking space with improved security.

The power source processing unit 10 includes a power source protection unit 12, a filter voltage step-down unit 14 and a voltage stabilization unit 16. The power source protection unit 12 receives the input power source Vin for generating the first power source V1. The filter voltage step-down unit 14 receives the first power source V1 for generating a voltage drop power source VL. The power stabilization unit 16 receives the voltage drop power source VL for generating the second power source V2.

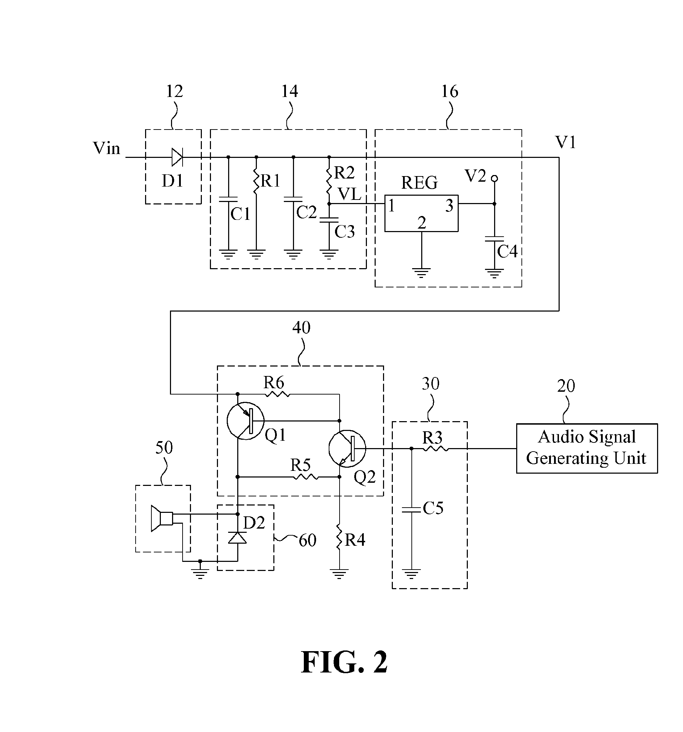

Fig. 2 is a circuit diagram illustrating the circuitry of the car reverse alarm of the present invention.

Referring to Fig. 2, the input power source Vin for example is a direct current power source having a voltage of 12V or 24V The first voltage V1 is lower than the voltage of the input power source Vin for a voltage drop value, e.g., a turn-on voltage of a diode which is typically 0.7V. The second voltage V2 is 5V or 3V The voltage drop power source VL has a voltage between the first power source V1 and the second power source V2.

The power source protection unit 12 includes a power source protection diode D1. The power source protection diode D1 includes a positive electrode end and a negative electrode end. The positive electrode end of the power source protection diode D1 is coupled to the input power source Vin. The negative electrode end of the power source protection diode D1 is coupled to the first power source V1, for preventing the user incorrectly coupling the input power source, e.g., incorrectly setting the 12V power source of the car as a -12V input power source, so as to protect the entire electrical configuration of the car. It should be further noted that the power source protection unit 12 can also be realized with other electronic components, such as an IC having a protection function.

As shown in Fig. 2, the filter voltage step-down unit 14 includes a first resistor R1, a second resistor R2, a first capacitor C1, a second capacitor C2, and a third capacitor C3. The first resistor R1, the first capacitor C1, and the second capacitor C2 are parallel connected to the first power source V1 and a ground. The second resistor R2 and the third capacitor C3 are serially connected between the first power source V1 and the ground. A connection point between the second resistor R2 and the third capacitor C3 is coupled to the voltage drop power source VL.

The voltage stabilization unit 16 includes a voltage regulator REG and a fourth capacitor C4. The fourth capacitor C3 is coupled to the second power source V2.

The audio signal generating unit 20 is preferably an integrated circuit (IC) chip, e.g., a single chip microcontroller, or a single chip microprocessor. The audio signal generating unit 20 for example includes a program execution unit, a digital-to-analog converter (DAC) unit, a data memory, and a program memory. The program memory saves a firmware program. The data memory saves temporarily generated data during execution of the firmware program. The program execution unit executes the firmware program according to the received backing signal, and generates a digital preliminary audio signal. The DAC unit converts the digital preliminary audio signal into an analog audio signal, and transmits the analog audio signal to the audio signal filter unit 30.

The audio signal filter unit 30 includes a third resistor R3 and a fifth capacitor C5. The third resistor R3 and the fifth capacitor C5 are serially coupled each other. The third resistor R3 includes a first end receiving the audio signal from the audio signal generating unit 20, and a second end is coupled with the fifth capacitor C5, and is coupled to the audio signal filter signal.

The audio signal amplification unit 40 for example can be an ordinary Darlington amplifier. The audio signal amplification unit 40 includes a first transistor Q1, a second transistor Q2, a fourth resistor R4, a fifth resistor R5, and a sixth resistor R6. Each of the first transistor Q1 and the second transistor Q2 includes a base, a drain, and an emitter. The base of the first transistor Q1 receives the audio signal filter signal from the audio signal filter unit 30. The drain of the first transistor Q1 is coupled to the base of the second transistor Q2. One end of the fourth resistor R4 is serially coupled to one end of the fifth resistor R5, and is coupled to the emitter of the first transistor Q1. Another end of the fourth resistor R4 is coupled to the ground. Another end of the fifth resistor R5 is coupled to the drain of the second transistor Q2 and is coupled to the audio driving signal. One end of the sixth resistor R6 is coupled to the drain of the first transistor Q1, and another end of the sixth resistor R6 is coupled the emitter of the second transistor Q2 and the first power source V1.

The voice speaker 50 for example is a speaker or a loudspeaker or a horn. The voice speaker 50 includes a first end coupled for receiving the audio driving signal from the audio signal amplification unit 40, and a second end coupled to the ground. The voice speaker protection unit 60 is preferably a voice speaker protection diode D2 parallel coupled with the voice speaker 50. In other words, one end of the voice speaker protection unit 60 is coupled to the audio driving signal of the audio signal amplification unit 40, and another end of the voice speaker protection unit 60 is coupled to the ground.

According to an aspect of the present invention, the firmware program can be updated for modifying the audio signal outputted from the audio signal generating unit. In such a way, the voice speaker outputs the desired voice. The voice for example can be outputted with different tones or volumes, or even simulating the human speech, e.g., "attention, the car is backing".

Although the present invention has been described with reference to the preferred embodiments thereof, it is apparent to those skilled in the art that a variety of modifications and changes may be made without departing from the scope of the present invention which is intended to be defined by the appended claims.

## Claims

1. A car reverse alarm, adapted for being equipped in a car, comprising:
a power source processing unit, receiving an input power source for generating a first power source and a second power source, wherein the first power source and the second power source are stable;
an audio signal generating unit, receiving a backing signal indicating to a backing operation of the car, and generating an audio signal according to the received backing signal, wherein the audio signal generating unit comprises:
a program memory, saving a firmware program;
a program execution unit, executing the firmware program according to the backing signal, and generating a digital type preliminary audio signal;
a digital-to-analog converter (DAC) unit, adapted for converting the digital type preliminary audio signal into an analog audio signal; and
a data memory, saving temporarily generated data during the execution of the firmware program;
an audio signal filter unit, receiving the audio signal for generating an audio signal filter signal;
an audio signal amplification unit, receiving the audio signal filter signal for generating an audio driving signal;
a voice speaker, receiving the audio driving signal for generating an alert voice; and
a voice speaker protection unit, receiving the audio driving signal for protecting the voice speaker,
wherein the first power source and the second power source are respectively provided for the audio signal amplification unit and the audio signal generating unit.

2. The car reverse alarm as claimed in claim 1, wherein the power source processing unit comprises:
a power source protection unit, receiving the input power source for generating the first power source;
a filter voltage step-down unit, receiving the first power source for generating a voltage drop power source; and
a voltage stabilization unit, receiving the voltage drop power source for generating the second power source.

3. The car reverse alarm as claimed in claim 2, wherein the power source protection unit comprises a power source protection diode having a positive electrode end coupling to the input power source, and a negative end coupled to the first power source.

4. The car reverse alarm as claimed in claim 2, wherein the filter voltage step-down unit comprises a first resistor, a second resistor, a first capacitor, a second capacitor, and a third capacitor, wherein the first resistor, the first capacitor and the second capacitor are parallel connected to the first power source and a ground, the second resistor and the third capacitor are serially connected between the first power source and the ground, and a connection point between the second resistor and the third capacitor is coupled to the voltage drop power source.

5. The car reverse alarm as claimed in claim 2, wherein the voltage stabilization unit comprises a voltage regulator and a fourth capacitor, and the fourth capacitor is coupled to the second power source.

6. The car reverse alarm as claimed in claim 1, wherein the audio signal generating unit is an integrated circuit (IC) chip and the IC chip is a single chip microcontroller or a single chip microprocessor.

7. The car reverse alarm as claimed in claim 1, wherein the audio signal filter unit comprises a third resistor and a fifth capacitor, wherein the third resistor and the fifth capacitor are serially connected each other, wherein one end of the third resistor receives the audio signal from the audio signal generating unit, and another end of the third resistor is coupled with the fifth capacitor and is coupled to the audio signal filter signal.

8. The car reverse alarm as claimed in claim 1, wherein the audio signal amplification unit is a Darlington amplifier comprising a first transistor, a second transistor, a fourth resistor, a fifth resistor and a sixth resistor, wherein each of the first transistor and the second transistor comprises a base, a drain, and an emitter, wherein the base of the first transistor receives the audio signal filter signal from the audio signal filter unit, the drain of the first transistor is coupled to the base of the second transistor, wherein one end of the fourth resistor is serially coupled to one end of the fifth resistor, and is coupled to the emitter of the first transistor, and another end of the fourth resistor is coupled to a ground, wherein another end of the fifth resistor is coupled to the drain of the second transistor and is coupled to the audio driving signal, one end of the sixth resistor is coupled to the drain of the first transistor, and another end of the sixth resistor is coupled the emitter of the second transistor and the first power source.

9. The car reverse alarm as claimed in claim 1, wherein the voice speaker is a speaker or a horn, and the voice speaker comprises a first end coupled for receiving the audio driving signal from the audio signal amplification unit, and a second end coupled to the ground.

10. The car reverse alarm as claimed in claim 1, wherein the voice speaker protection unit is a voice speaker protection diode parallel coupled with the voice speaker, wherein one end of the voice speaker protection unit is coupled to the audio driving signal of the audio signal amplification unit, and another end of the voice speaker protection unit is coupled to the ground.
